## Europäisches Patentamt

## European Patent Office

## Office européen des brevets

(11) Veröffentlichungsnummer: **0 503 546 B1**

# EUROPÄISCHE PATENTSCHRIFT

(45) Veröffentlichungstag der Patentschrift: **15.02.95**

(51) Int. Cl.$^6$: **C02F 3/34**, C02F 3/12

(21) Anmeldenummer: **92104034.1**

(22) Anmeldetag: **09.03.92**

(54) **Verfahren zur biologischen Reinigung von Wasser.**

(30) Priorität: **12.03.91 DE 4107917**

(43) Veröffentlichungstag der Anmeldung:
**16.09.92 Patentblatt 92/38**

(45) Bekanntmachung des Hinweises auf die
Patenterteilung:
**15.02.95 Patentblatt 95/07**

(84) Benannte Vertragsstaaten:
**AT CH DE DK LI NL SE**

(56) Entgegenhaltungen:
**EP-A- 0 346 013**
**DE-A- 1 904 239**
**DE-A- 3 009 151**
**DE-A- 4 004 762**
**FR-A- 2 472 540**

(73) Patentinhaber: **NITRA Gesellschaft für Biotechnik mbH**
**Sinstorfer Kirchweg 74-92**
**D-21077 Hamburg (DE)**

(72) Erfinder: **Bewernick, Martin**
**Tondernstrasse 21a**
**W-2000 hamburg 70 (de)**

**Beschreibung**

Die Erfindung betrifft ein Verfahren zur biologischen Reinigung von Wasser.

Die Abwasserreinigung hat das Ziel, das Abwasser von organischen und anorganischen Bestandteilen zu befreien, bevor es in die Bäche und Flüsse eingeleitet wird. Hierbei gewinnt die biologische Reinigung zunehmend an Bedeutung, weil nur so ein vollständiger Abbau der verunreinigenden Stoffe möglich ist. Da für die biologische Abwasserreinigung jedoch Mikroorganismen verantwortlich sind, ist deren Konzentration und Stoffwechselaktivität stets von entscheidender Bedeutung. Nicht selten brechen diese "natürlichen" Systeme zusammen, weil das Gleichgewicht zwischen den beteiligten Arten gestört oder das Gesamtsystem durch äußere Faktoren in seiner Leistungsfähigkeit beeinträchtigt wird. Dann vergehen häufig Wochen und Monate, bis das ursprüngliche Gleichgewicht wieder hergestellt ist. Diese Probleme betreffen im Grunde alle biologischen Reinigungssysteme, vor allem aber die Nitrifikation mit den hieran beteiligten, langsam wachsenden Organismen.

Nach Verschärfung der gesetzlichen Auflagen und Einbeziehung des Stickstoffs in die Liste der Abgabenparameter müssen die Ablaufwerte insbesondere für Ammonium deutlich gesenkt werden. Das biologische System der Nitrifikation muß hierzu optimiert werden, wobei es insbesondere darauf ankommt, die hierfür verantwortlichen Bakterien, die Nitrifikanten, in ausreichender Menge im System verfügbar zu haben.

Ein Nitrifikations verfahren ist bspw aus DE-A-3 009 151 bekannt. Diesem Dokument liegt die Aufgabe zugrunde, die Nitrifikation in Kläranlagen besser starten zu können (D2, Seite 3, Zeilen 27-31). Um diese Aufgabe zu lösen, wird vorgeschlagen, den Überschußschlamm aus einer nitrifizierenden Belebungs- und/oder Tropfkörperanlage zu nutzen, um auf diese Weise einen Vorrat an nitrifizierendem Impfschlamm zur Verfügung zu haben. (D2, Seite 4, Zeilen 14-19 sowie Zeilen 33-35). Dieser Überschußschlamm wird entwässert, unter aeroben Bedingungen gelagert und bei Bedarf einem nitrifizierenden Abwasser in einem Belebungsbecken oder Tropfkörper zugeführt (D2, Seite 4, Zeilen 14-19). Hierbei ist zu berücksichtigen, daß die in dem Überschußschlamm enthaltenden Nitrifikanten nicht vermehrt werden und wie alle Bakterien, im Laufe der Zeit absterben. Das Besondere an diesem Verfahren soll sein, die Überlebensbedingungen für die Nitrifikanten zu verbessern, indem aerobe Bedingungen geschaffen werden.

Die objektive Aufgabe der vorliegenden Erfindung ist es demnach, ein Verfahren zur biologischen Reinigung von Abwasser zu schaffen, das insbesondere eine gezielte Vermehrung von langsam wachsenden Bakterien ermöglicht.

Erfindungsgemäß erfolgt die Lösung der Aufgabe insbesondere durch die Merkmale des Anspruchs 1

Die im Abwasser normalerweise vorliegenden Ammoniumkonzentrationen von 10 bis 100 mg Ammoniumstickstoff/l reichen im allgemeinen nicht aus, um eine leistungsfähige Nitrifikantenpopulation zu erzeugen, weil die für das Wachstum dieser Organismen optimale Substratkonzentration damit nicht erreicht ist. Die ohnehin langen Generationszeiten dieser Organismen werden durch die suboptimale Ammoniumkonzentration nochmals verschlechtert. Das gleiche gilt für die Nitritoxidanten, die das bei der Ammoniumoxidation entstehende Nitrit weiter zu Nitrat oxidieren.

Gemäß der vorliegenden Erfindung kann nun die Zellzahl der jeweiligen Bakterien erhöht und die Leistungsfähigkeit des Systems gesteigert werden. In einem Vorlagebehälter werden möglichst optimale Bedingungen zur Anzucht der Organismen geschaffen, z.B. dadurch, daß man für die Nitrifikanten synthetische Medien bereitstellt, die eine für das Wachstum günstige Stoffzusammensetzung aufweisen. Hierzu können beispielsweise folgende Medien dienen:

Nährmedium für Ammoniakoxidanten:

| | |
|---|---|
| $NH_4Cl$ | 0,5 - 5,000 g/l |
| $KH_2PO_4$ | 0,054 g/l |
| $KCl$ | 0,074 g/l |
| $MgSO_4 \times 7\ H_2O$ | 0,049 g/l |
| $CaCl_2 \times 2\ H_2O$ | 0,147 g/l |
| $NaCl$ | 2,945 g/l |
| $MnSO_4 \times H_2O$ | 0,045 mg/l |
| $H_3BO_3$ | 0,049 mg/l |
| $ZnSO_4 \times 7\ H_2O$ | 0,043 mg/l |
| $(NH_4)_6Mo_7O_{24} \times 4\ H_2O$ | 0,037 mg/l |
| $FeSO_4 \times 7\ H_2O$ | 0,973 mg/l |
| $CuSO_4$ | 0,016 mg/l |

Nährmedium für Nitritoxidanten:

| | |
|---|---|
| $NaNO_2$ | 0,2 - 5,000 g/l |
| $CaCO_3$ | 0,007 g/l |
| $NaCl$ | 0,500 g/l |
| $MgSO_4 \times 7\ H_2O$ | 0,050 g/l |
| $KH_2PO_4$ | 0,150 g/l |
| $FeSO_4 \times 7\ H_2O$ | 0,150 mg/l |
| $(NH_4)_6Mo_7O_{24} \times 4\ H_2O$ | 0,050 mg/l |

Zur Vermeidung zusätzlicher Stoffeinträge können aber auch Lösungen verwendet werden, die ohnehin hohe Ammoniumkonzentrationen aufweisen und die normalerweise dem Abwasser beigemischt werden. Diese Teilströme machen nicht selten 50 % der Stickstofffracht des Gesamtabwassers aus, obgleich ihr Volumenanteil demgegenüber gering ist.

Hohe Ammoniumkonzentrationen entstehen z.B. während der Schlammbehandlung bei Faulungsprozessen im Wege der Ammonifikation. Über verschiedene Desaminierungen können hierbei Proteine von zahlreichen Bakterien und Pilzen abgebaut werden. Das abgespaltene Ammonium reichert sich im Faulwasser an und erreicht nicht selten Konzentrationen von 700 mg Ammoniumstickstoff/l und mehr.

Die Quellen der Rückbelastung insbesondere bei kommunalen Kläranlagen sind mittlerweile bekannt. So ergeben sich die rückbelastenden Stoffströme z.B. aus den Schlammwässern von Voreindickern, Nacheindickern, bei chemischer bzw. thermischer Konditionierung, bei der Entwässerung, Trocknung sowie durch die rückgeführten Trübwässer aus den Faulbehältern.

Ebenfalls hohe Ammoniumkonzentrationen kommen aber auch in Gülle vor, wo häufig Werte bis zu 2 g Ammoniumstickstoff/l erreicht werden.

Derart hoch belastete Wässer bieten gute Anzuchtsbedingungen für viele Mikroorganismen. Nitrifikanten besitzen beispielsweise gerade bei den zuvor genannten Konzentrationen ihr Substratoptimum, weshalb sich z.B. die rückbelastenden Stoffströme ideal zur Anzucht dieser Organismen eignen. In Anpassung an die synthetischen Medien können darüber hinaus Nährstoffe wie Spurenelemente oder fehlende Mineralstoffe zugesetzt werden, um aus diesen Wässern ein möglichst optimales Medium herzustellen. Weitere Wachstumsparameter wie Temperatur, pH-Wert und der Sauerstoffgehalt des Wassers können ebenfalls optimiert werden. Günstige Werte hierfür liegen im Bereich von 20-30°C, insbesondere bei 28°C, bei einem pH-Wert im Bereich von pH 7 bis pH 8, vorzugsweise bei pH 7,6 und einer relativen Sauerstoffsättigung im Bereich von 30 bis 100 %.

Der Vorlagebehälter kann aber auch bei niedrigeren Sauerstoffsättigungen betrieben werden, wenn z.B. anaerobe oder fakultativ anaerobe Bakterien angereichert werden sollen. Beispielsweise lassen sich auf diese Denitrifikanten kultivieren, so daß auch eine simultane oder intermittierende Nitrifikation/Denitrifikation möglich ist.

Vorteilhaft hat sich auch der Einsatz von speziellen Starterkulturen aus Ammoniak- und Nitritoxidanten erwiesen. Auf diese Weise wird im Vorlagebehälter bereits nach wenigen Tagen ein hoher Stoffumsatz erreicht. Von diesem System wird dann kontinuierlich oder in Abständen, je nach Bedarf, aktive Biomasse der biologischen Reinigungsstufe z.B. eines Klärwerkes zugeführt. Hierbei kann es sich sowohl um Belebungsbecken als auch um Tropfkörper handeln. Letztere werden mit der aktiven Biomasse besprüht.

Rückbelastende Stoffströme und andere stark ammonium- oder nitrithaltige Wässer können ohne Zusatzstoffe unverdünnt im Vorlagebehälter eingesetzt werden. Faulwässer aus der Schlammbehandlung haben hierbei den Vorteil, daß die Ammoniumkonzentrationen hoch sind und die Temperatur beim Austritt aus dem Faulturm bereits 35°C beträgt. Hierdurch entfallen zusätzliche Energiekosten, die für das Erreichen der optimalen Anzuchtstemperatur erforderlich wären. Darüber hinaus wird durch eine entsprechende Teilstrombehandlung die Stickstoffbelastung der Kläranlage insgesamt reduziert, da ein Großteil des Ammoniums und des Nitrits bereits umgesetzt sind, bevor die eigentliche Belebungsstufe passiert wird. Eine konzentrierte Anwendung der hochbelasteten Wässer bewirkt neben dem effektiveren Abbau insbesondere der Stickstoffverbindungen vor allem eine Raumersparnis in bezug auf die Gesamtanlage, da der Stoffumsatz bei der Nitrifikation mit zunehmender Substratkonzentration ansteigt und erst bei Überschreiten des Substratoptimums zurückgeht.

Die Leistungsfähigkeit des erfindungsgemäßen Verfahrens steigt mit der erhaltenen Zellkonzentration im Vorlagebehälter. Werden bei entsprechender Anzucht beispielsweise $10^8$ Zellen nitrifizierender Bakterien/ml erreicht, steht für die weitere Verwendung eine Biomasse zur Verfügung, die mindestens die tausendfache Zellkonzentration im Vergleich zur üblichen Belebungsstufe aufweist. Die Menge der überführten Biomasse richtet sich dann nach Größe des Vorlagebehälters und dem Bedarf an aktiver Biomasse in der nachgeschalteten biologischen Stufe. Geeignet als Vorlagebehälter ist z.B. ein Fließbettreaktor mit einem Volumen das kleiner ist als das des anschließend zu beschickenden Belebungsbeckens. Große Vorlagebehälter können zum Abfangen von regelmäßig auftretenden Stoßbelastungen eingesetzt werden, während kleine Vorlagebehälter zur Unterstützung einer bereits funktionierenden Nitrifikation ausreichen.

Besondere Anforderungen an den Vorlagebehälter brauchen nicht gestellt zu werden. Es eignen sich grundsätzlich alle Behälter- oder Beckentypen, die gegebenenfalls eine Belüftungseinrichtung aufweisen können. Wird der Vorlagebehälter kontinuierlich betrieben, kann dieser auch als Fließbett-Umlaufreaktor ausgebildet sein. Bei Bedarf kann so der am Kopf des Reaktors austretende Flüssigkeitsstrom zum Reaktoreinlaß zurückgeführt und gegebenenfalls mit dem Reaktorzulauf vermischt werden. Über Meß- und Regeleinrichtungen können wichtige Wachstumsparameter konstant gehalten werden.

**Ausführungsbeispiel:**

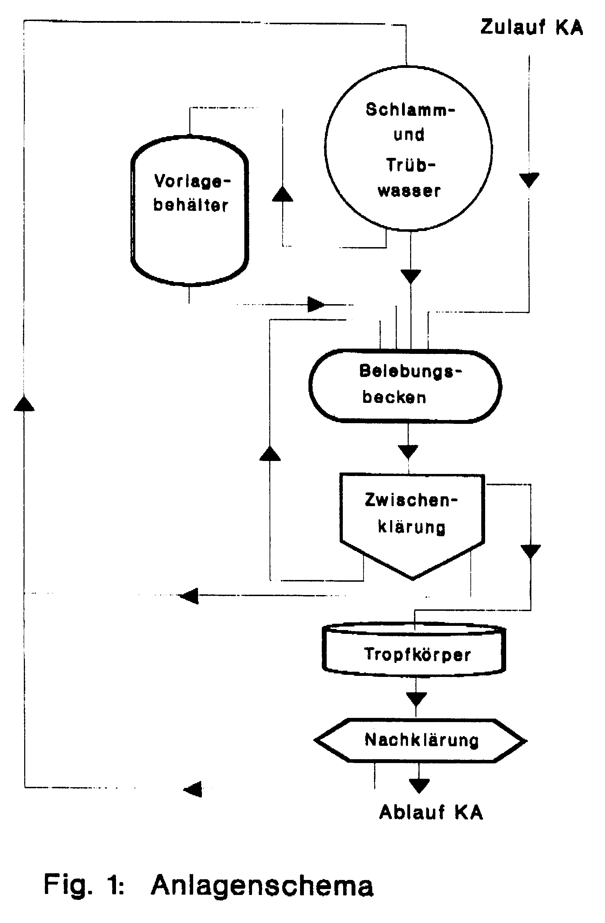

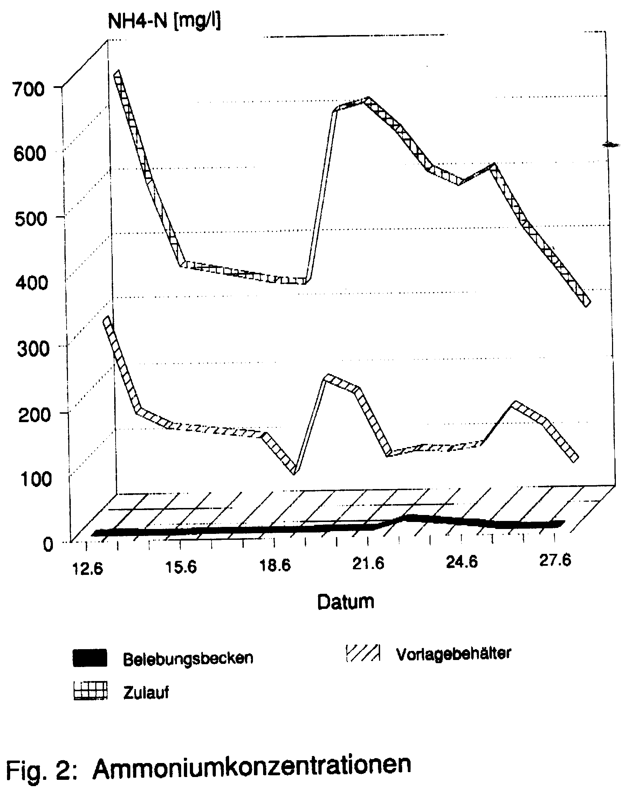

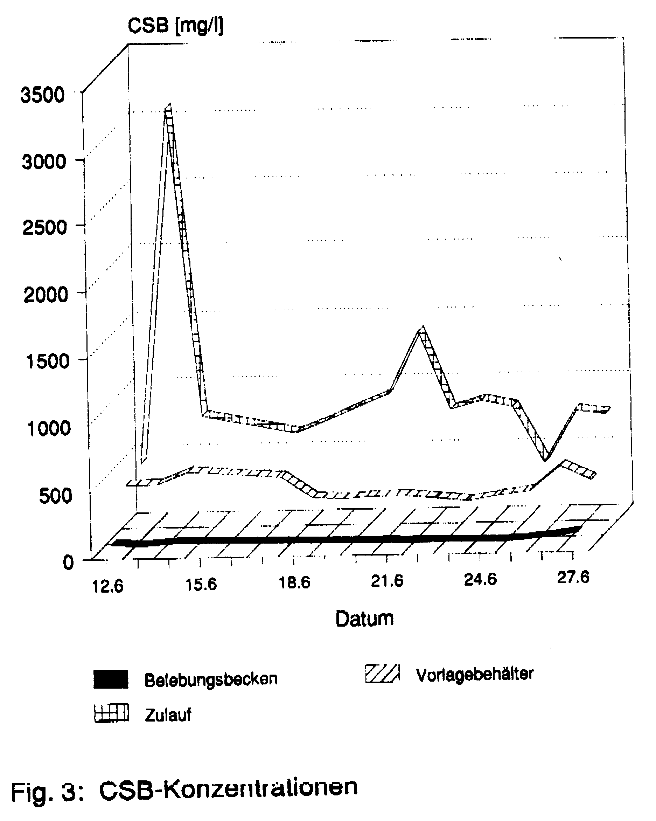

Gemäß dem in Fig. 1 dargestellten Anlagenschema wurde ein Vorlagebehälter mit 1 m³ Trübwasser befüllt. Dieser Behälter war ausgestattet mit einer Belüftungseinheit zur feinblasigen Belüftung, einer Umwälzpumpe, Meßeinheiten zur kontinuierlichen pH-Wert- und Sauerstoff-Messung sowie einem Ablauf zum nachgeschalteten Belebungsbecken. Täglich wurde etwa 120 l Trübwasser in den Vorlagebehälter gegeben, so daß ein entsprechendes Volumen in die nachgeschaltete Belebungsstufe verdrängt wurde. Das Belebungsbecken hatte ein Volumen von ca. 2 m³ und wurde stündlich mit 240 l Abwasser aus dem Zulauf der Kläranlage beschickt. Das Zulaufwasser wies dabei eine durchschnittliche $NH_4$-N-Konzentration von 35 mg/l auf. Bei einer relativen Sauerstoffsättigung von ca. 50 % und einer Temperatur von durchschnittlich ca. 20°C wurden die in Fig. 2 und 3 dargestellten Ergebnisse erzielt.

**Patentansprüche**

1. Verfahren zur biologischen Reinigung von Abwasser, dadurch gekennzeichnet, daß man in einem Vorlagebehälter eine stoffwechselaktive Nitrifikantenpopulation kultiviert, von der aus kontinuierlich oder in Abständen Biomasse in eine biologische Reinigungsstufe überführt wird, wobei man in den Vorlagebehälter einen rückbelastenden Stoffstrom mit hoher Stickstofffracht leitet.

2. Verfahren nach Anspruch 1, dadurch gekennzeichnet, daß sich der rückbelastende Stoffstrom ergibt aus den Schlammwässern von Voreindickern, Nacheindickern, bei chemischer bzw. thermischer Konditionierung, bei der Entwässerung, Trocknung sowie durch die rückgeführten Trübwässer aus den Faulbehältern.

3. Verfahren nach Anspruch 1 oder 2, dadurch gekennzeichnet, daß im Vorlagebehälter die Konzentration der für die Bakterien verwertbaren Substrate durch Zusatz synthetischer Medien erhöht wird.

4. Verfahren zur biologischen Reinigung von Abwasser, dadurch gekennzeichnet, daß man in einem Vorlagebehälter eine stoffwechselaktive Nitrifikantenpopulation kultiviert, von der aus kontinuierlich oder in Abständen Biomasse in eine biologische Reinigungsstufe überführt wird, wobei man in den Vorlagebehälter ein synthetisches Medium mit mindestens 130 mg NH$_4$-N/l bzw. 40 mg NO$_2$-N/l leitet.

5. Verfahren zur biologischen Reinigung von Abwasser, dadurch gekennzeichnet, daß man in einem Vorlagebehälter eine stoffwechselaktive Nitrifikantenpopulation kultiviert, von der aus kontinuierlich oder in Abständen Biomasse in eine biologische Reinigungsstufe überführt wird, wobei man in den Vorlagebehälter Gülle leitet.

6. Verfahren nach einem der vorhergehenden Ansprüche, dadurch gekennzeichnet, daß eine simultane oder intermittierende Nitrifikation/Denitrifikation durchgeführt wird.

**Claims**

1. Process for biological sewage treatment, characterized in that a metabolically active population of nitrifiers is grown in a receiving tank from which biomass is continuously or periodically transfered to a biological treatment of sewage, whereby a secudary contaminating return flow containing a high nitrogen load is fed into the receiving tank.

2. Process according to claim 1, characterized in that the secudary contating return flow is obtained from sludge waters of pre-thickeners, post-thickeners, from chemical or thermal conditioning, from dewatering, drying as well as from return flows of turbid waters from the digesters.

3. Process according to claim 1 or 2, characterized in that the concentration of the substrates utilized by the bacteria is increased in the receiving tank by adding sythetic media.

4. Process for biological sewage treatment, characterized in that a metabolically active population of nitrifiers is grown in a receiving tank from which biomass is continuously or periodically transfered to a biological treatment of sewage, whereby a synthetic medium with at least 130 mg NH$_4$-N/l or 40 mg NO$_2$-N/lg/l respectively is fed into the receiving tank.

5. Process for biological sewage treatment, characterized in that a metabolically active population of nitrifiers is grown in a receiving tank from which biomass is continuously or periodically transfered to a biological treatment of sewage, whereby liquid manure is fed into the receiving tank.

6. Process according to one of the previous claims, characterized in that a simultaneous or intermittent nitrification/denitrification carried out.

**Revendications**

1. Procédé d'épuration biologique des eaux usées, caractérisé en ce qu'une population de nitrifiants métaboliquement active est cultivée dans un récipient collecteur, à partir duquel de la biomasse est transférée soit en continu, soit alternativement à l'étage d'épuration biologique, et on injecte dans le récipient collecteur un courant de matiére de charge secondaire, ayant une forte charge en nitrogène.

2. Procédé selon la revendication 1, caractérisé en ce que le courant de matiére de charge secondaire est issu des liquides surnageants des pré-épaississeurs et des épaississeurs secondaires, du conditionnement chimique ou thermique, de la déshydratation, de l'assêchement ainsi que des liquides surnageants recyclés provenant des digesteurs.

3. Procédé selon les revendications 1 ou 2, caractérisé en ce que la concentration des substrats consommé par les bactéries est augmenté par un ajout de media synthétiques.

4. Procédé d'épuration biologique des eaux usées, caractérisé en ce qu'une population de nitrifiants métaboliquement active est cultivée dans un récipient collecteur, à partir duquel de la biomasse est transférée, soit en continu, soit alternativement à l'étage d'epuration biologique, et on injecte dans le récipient collecteur une medium synthétique d'au moins 130 mg $NH_4$-N/l ou encore de 40 mg $NO_2$-N/l.

5. Procédé d'épuration biologique des eaux usées, caractérisé en ce qu'une population de nitrifiants métaboliquement active est cultivée dans un récipient collecteur, à partir duquel de la biomasse est transférée, soit en continu, soit alternativement à l'étage d'épuration biologique et on injecte du lisier dans le récipient collecteur.

6. Procédé selon l'une des revendications précédentes, caractérisé en ce que l'on réalise une nitrification/dénitrification simultanément on par intermitence.

EP 0 503 546 B1

Fig. 1: Anlagenschema

7

Fig. 2: Ammoniumkonzentrationen

Fig. 3: CSB-Konzentrationen